# EUROPEAN PATENT APPLICATION

(11) **EP 4 362 188 A2**
(43) Date of publication of application: **01.05.2024**
(21) Application number: 23203261.5
(22) Date of filing: 12.10.2023
(51) Int. Cl.: H01M 50/247, H01M 50/284, H01M 50/296

(54) **WATERPROOF BATTERY PACK**

(30) Priority: 26.10.2022 CN 202222827395 U
(71) Applicant: Shanghai Baicheng Electric Equipment Manufacture Co. Ltd., Shanghai 201806 (CN)
(72) Inventor: ZHAO, Xianguo, Waigang Town, Jiading District, Shanghai, 201806 (CN); ZHOU, Liangliang, Waigang Town, Jiading District, Shanghai, 201806 (CN)
(74) Representative: Ricker, Mathias

(57) **Abstract**

Provided is a waterproof battery pack. The waterproof battery pack includes a housing (10), an electronic component, and a connection assembly (20). The interior of the housing (10) is hollow to form a mounting cavity; the electronic component is mounted in the mounting cavity; and the connection assembly is slidably connected to the housing (10), the connection assembly (20) includes a first button (21) and a connector (22). The waterproof battery pack further includes a waterproof partition (30) located between the connection assembly (20) and the electronic component, where the waterproof partition (30) is connected to the housing (10) to divide the mounting cavity into a first mounting space and a second mounting space that are independent of each other. The connection assembly (20) is mounted in the first mounting space, and the electronic component is mounted in the second mounting space.

## Description

### TECHNICAL FIELD

The present disclosure relates to the technical field of batteries and, in particular, to a waterproof battery pack.

### BACKGROUND

When a direct current power tool needs to be used in scenarios without a mains power plug, a battery pack is generally used as a power supply device. The battery pack can be used normally in a dry environment. However, if the humidity in a usage scenario is relatively large or when the battery pack is used in a water pump, a cleaning machine, or other devices, the water vapor or waterdrop enters the battery pack, causing the short circuit of the electronic component or the cell in the battery pack, resulting in the failure of the battery pack.

Based on the above, the waterproof function of some of the existing battery packs is improved. For example, the junction between the upper housing and the lower housing of the battery pack is sealed through glue injection, or the upper housing and the lower housing are made of the waterproof material so that the waterproof effect is ensured.

It is found in actual use that the circuit board located below a release button is prone to the short circuit caused by moisture. This is because the release button is used for controlling a connecting portion of the battery pack to be connected to/separated from the power tool, resulting in the frequent use of the release button; since the release button mates with the housing with a gap between the release button and the housing, the waterdrop or water vapor enters the battery pack from the gap between the release button and the housing during the use of the release button, causing the short circuit of the electronic component or the cell in the battery pack.

### SUMMARY

The present disclosure provides a waterproof battery pack so that even if the waterdrop or water vapor enters a housing from a gap between a first button and the housing, the waterdrop or water vapor cannot be in contact with an electronic component, and the short circuit is avoided.

A waterproof battery pack includes a housing, an electronic component, and a connection assembly, where the interior of the housing is hollow to form a mounting cavity; the electronic component is mounted in the mounting cavity; and the connection assembly is slidably connected to the housing, the connection assembly includes a first button and a connector, and the first button is configured to be pressed toward the side of the electronic component to drive the connector to be disconnected from a power tool; where the waterproof battery pack further includes a waterproof partition.

The waterproof partition is located between the connection assembly and the electronic component, where the waterproof partition is connected to the housing to divide the mounting cavity into a first mounting space and a second mounting space that are independent of each other.

The connection assembly is mounted in the first mounting space, and the electronic component is mounted in the second mounting space.

In some embodiments, a sealing member is disposed at a junction between the waterproof partition and the housing.

In some embodiments, a display module is included, where the display module includes a display unit, where the display unit includes a light-emitting diode (LED) lamp, a transparent lens, and a display screen.

In some embodiments, the LED lamp is mounted on the electronic component.

In some embodiments, the transparent lens is mounted on the waterproof partition, where a sealing member is disposed at a junction between the transparent lens and the waterproof partition.

In some embodiments, the display screen is mounted on the housing and placed above the first mounting space.

In some embodiments, the LED lamp, the transparent lens, and the display screen are arranged in sequence along a first direction.

In some embodiments, the display module further includes a control unit, where the control unit includes a switch button, a rubber pad, and a second button.

In some embodiments, an end of the switch button is connected to the electronic component.

In some embodiments, the rubber pad is mounted on the waterproof partition, where a sealing member is disposed at a junction between the rubber pad and the waterproof partition.

In some embodiments, the second button is slidably connected to the housing and placed in the first mounting space.

In some embodiments, the switch button, the rubber pad, and the second button are arranged in sequence along the first direction.

In some embodiments, the control unit is used for controlling the LED lamp to be turned on/off.

In some embodiments, the electronic component includes a circuit board, the waterproof battery pack further includes a connection terminal, the connection terminal includes a metal connector and a bracket, the bracket is fixedly connected to the circuit board, the metal connector is mounted on the bracket, the metal connector includes multiple first connection points and a second connection point, the multiple first connection points penetrate the bottom of the bracket and are connected to the circuit board, and the second connection point is used for connecting the power tool.

In some embodiments, a junction between the metal connector and the bracket is sealed with glue.

In some embodiments, an S-shaped glue injection groove is opened on a side of the bracket facing the circuit board, the glue injection groove is connected to each of the multiple first connection points, a glue injection hole is opened on the circuit board at an end of the glue injection groove, and an observation hole is opened at the other end of the glue injection groove.

In some embodiments, the bracket is provided with a support portion, the housing abuts against the periphery of the support portion, and a sealing member is disposed at an abutting position between the support portion and the housing.

In some embodiments, an elastic member is disposed in the first mounting space so that the first button has a tendency to move toward a side facing away from the electronic component.

In some embodiments, the housing includes an upper housing and a lower housing, and a sealing member is disposed at a junction between the upper housing and the lower housing.

The present disclosure provides a waterproof battery pack. The waterproof battery pack includes a housing, an electronic component, and a connection assembly, where the interior of the housing is hollow to form a mounting cavity; the electronic component is mounted in the mounting cavity; and the connection assembly is slidably connected to the housing, the connection assembly includes a first button and a connector, and the first button can be pressed to drive the connector to be disconnected from a power tool. The waterproof battery pack further includes a waterproof partition located between the connection assembly and the electronic component, where the waterproof partition is connected to the housing to divide the mounting cavity into a first mounting space and a second mounting space that are independent of each other. The connection assembly is mounted in the first mounting space, and the electronic component is mounted in the second mounting space. With such a design, the waterproof partition is added between the connection assembly and the electronic component, and the connection assembly and the electronic component are separately placed in the mounting spaces that are independent of each other; when the first button is pressed to control the connector to be disconnected from the power tool, if the waterdrop or water vapor enters the housing through a gap between the first button and the housing, the waterdrop or water vapor is only placed in the first mounting space and cannot enter the second mounting space through the waterproof partition to be in contact with the electronic component so that the short circuit and failure of the electronic component can be avoided.

### BRIEF DESCRIPTION OF DRAWINGS

FIG. 1 is a front view of a waterproof battery pack according to an embodiment of the present disclosure;
FIG. 2 is a schematic view illustrating an installation position of a waterproof partition according to an embodiment of the present disclosure;
FIG. 3 is a schematic view illustrating an installation position of a circuit board according to an embodiment of the present disclosure;
FIG. 4 is a top view of a connection terminal according to an embodiment of the present disclosure;
FIG. 5 is a bottom view of a connection terminal according to an embodiment of the present disclosure; and
FIG. 6 is a bottom view of a circuit plate according to an embodiment of the present disclosure.

### Reference list

- 10: housing
- 20: connection assembly
- 21: first button
- 22: connector
- 30: waterproof partition
- 40: LED lamp
- 41: transparent lens
- 42: display screen
- 50: switch button
- 51: rubber pad
- 52: second button
- 60: circuit board
- 61: glue injection hole
- 62: observation hole
- 70: metal connector
- 701: first connection point
- 702: second connection point
- 71: bracket
- 711: S-shaped glue injection groove

### DETAILED DESCRIPTION

The present disclosure is further described below in detail in conjunction with drawings and embodiments. It is to be understood that the embodiments set forth below are intended to merely illustrate and not to limit the present disclosure. In addition, it is to be noted that, for ease of description, only part, not all, of the structures related to the present disclosure are illustrated in the drawings.

In the description of the present disclosure, unless otherwise expressly specified and limited, the term "connected to each other", "connected", or "fixed" is to be construed in a broad sense, for example, as fixedly connected, detachably connected, or integrated; mechanically connected or electrically connected; directly connected to each other or indirectly connected to each other via an intermediary; or internally connected or an interactional relationship between two elements. For those of ordinary skill in the art, specific meanings of the preceding terms in the present disclosure may be understood based on specific situations.

In the present disclosure, unless otherwise expressly specified and limited, when a first feature is described as "on" or "below" a second feature, the first feature and the second feature may be in direct contact, or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, it is to be noted that orientations or position relations indicated by terms such as "above", "below", and "right" are based on the drawings. These orientations or position relations are intended only to facilitate the description and simplify an operation and not to indicate or imply that a device or element referred to must have a particular orientation or must be configured or operated in a particular orientation. Thus, these orientations or position relations are not to be construed as limiting the present disclosure. In addition, the terms "first" and "second" are used only for distinguishing between descriptions and have no special meaning.

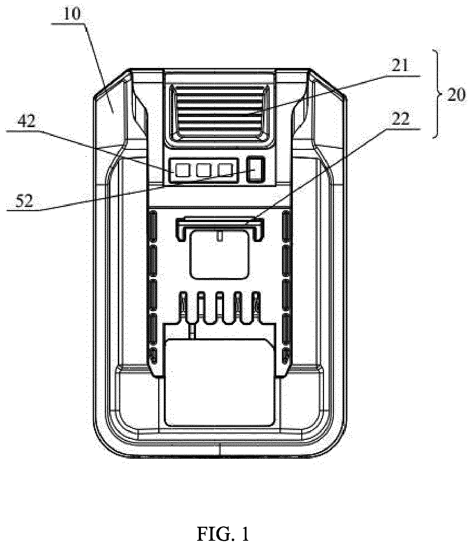

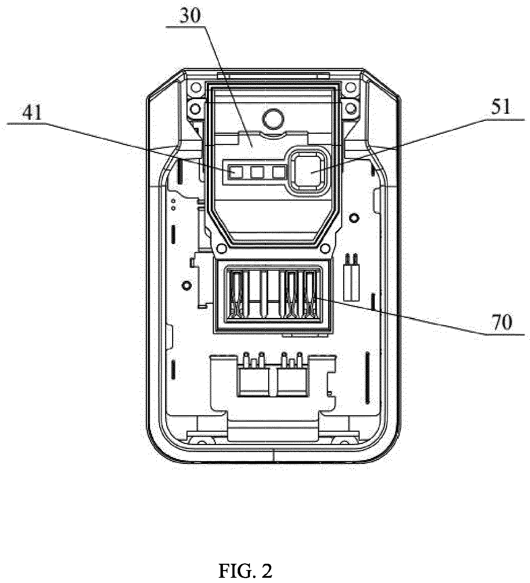

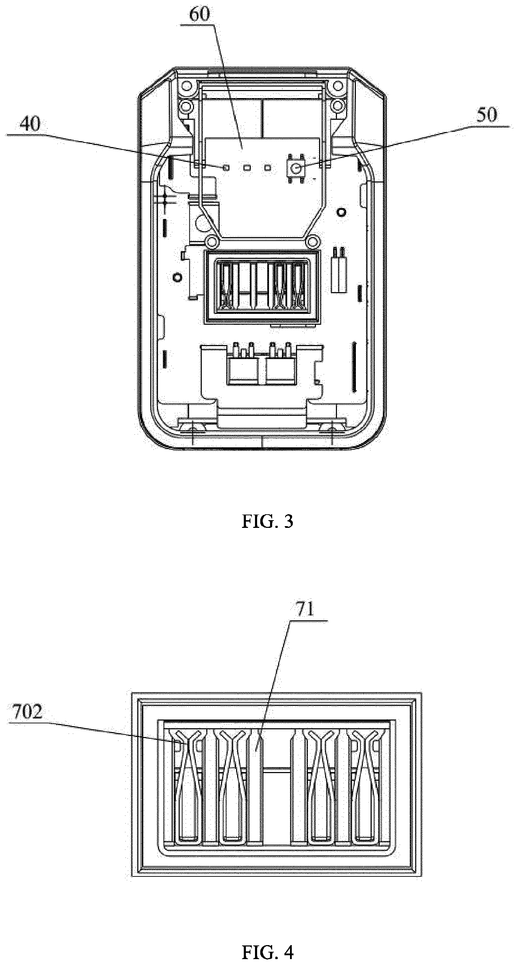

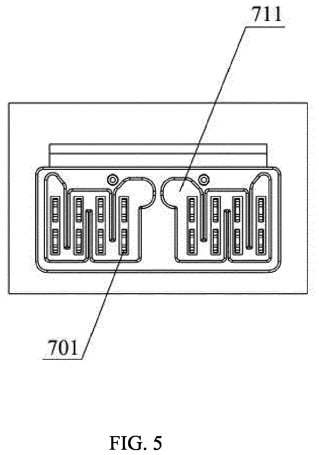

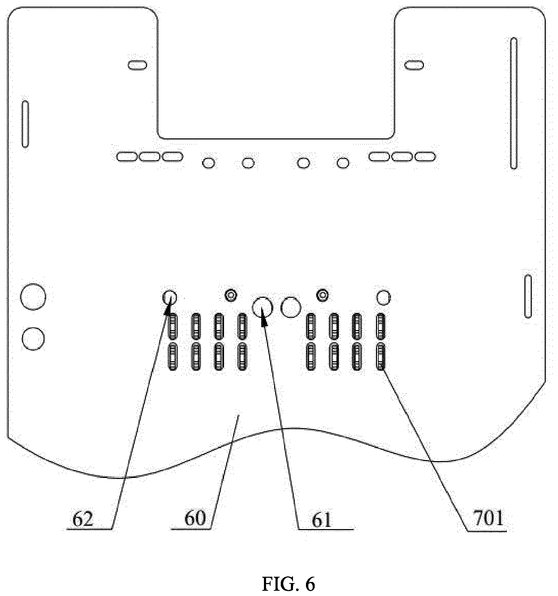

As shown in FIGS. 1 to 6, the present disclosure provides a waterproof battery pack. The waterproof battery pack includes a housing 10, an electronic component, and a connection assembly 20, where the interior of the housing 10 is hollow to form a mounting cavity; the electronic component is mounted in the mounting cavity; and the connection assembly 20 is slidably connected to the housing 10, the connection assembly 20 includes a first button 21 and a connector 22, and the first button 21 can be pressed to drive the connector 22 to be disconnected from a power tool. The waterproof battery pack further includes a waterproof partition 30 located between the connection assembly 20 and the electronic component, where the waterproof partition 30 is connected to the housing 10 to divide the mounting cavity into a first mounting space and a second mounting space that are independent of each other. The connection assembly 20 is mounted in the first mounting space, and the electronic component is mounted in the second mounting space.

With such a design, the waterproof partition 30 is added between the connection assembly 20 and the electronic component, and the connection assembly 20 and the electronic component are separately placed in the mounting spaces that are independent of each other; when the first button 21 is pressed to control the connector 22 to be disconnected from the power tool, if the waterdrop or water vapor enters the housing 10 through a gap between the first button 21 and the housing 10, the waterdrop or water vapor is only placed in the first mounting space and cannot enter the second mounting space through the waterproof partition 30 to be in contact with the electronic component so that the short circuit and failure of the electronic component can be avoided.

Optionally, a sealing member is disposed at a junction between the waterproof partition 30 and the housing 10. With such a design, the sealing property of the first mounting space and the second mounting space can be further strengthened, and the following can be avoided: the waterdrop or water vapor enters the first mounting space from the gap between the first button 21 and the housing 10 and then enters the second mounting space through a mounting gap between the waterproof partition 30 and the housing 10 to be in contact with the electronic component, and a short circuit is caused.

Optionally, the waterproof battery pack provided in this embodiment further includes a display module, the display module includes a display unit, the display unit includes LED lamps 40, transparent lenses 41, and a display screen 42, and the LED lamps 40 are mounted on the electronic component; the transparent lenses 41 are mounted on the waterproof partition 30, and a sealing member is disposed at a junction of the transparent lens 41 and the waterproof partition 30; the display screen 42 is mounted on the housing 10 and placed above the first mounting space; and the LED lamps 40, the transparent lenses 41, and the display screen 42 are arranged in sequence along a first direction.

It is to be noted that in this embodiment, the waterproof battery pack is generally used in an orientation where the display screen 42 is located above the first mounting space.

It is to be noted that the first direction is a thickness direction of the housing.

With such a design, the display screen 42 is placed above the first mounting space so that the waterproof partition 30 between the display screen 42 and the electronic component performs waterproof protection to prevent the waterdrop or water vapor, and the junction between the display screen 42 and the housing 10 enters the housing 10 and is in contact with the electronic component. At the same time, the transparent lenses 41 are added on the waterproof partition 30 so that the light of the LED lamps 40 mounted on the electronic component can still be projected to the screen mounted on the housing 10 so that the normal use of the display module is not affected while the waterproof setting is performed.

Specifically, the display module provided in this embodiment is used for prompting the remaining power of the battery in the battery pack. The display screen 42 is divided into multiple marked regions in sequence along a second direction. Correspondingly, the transparent lens 41 and the LED lamp 40 are disposed below each marked region. When the battery is fully charged, all the LED lamps 40 light up, and the marked regions are also illuminated. When part of the battery power is depleted, the light of the corresponding LED lamp 40 turns off, the light in the marked region goes dark, and the remaining illuminated parts indicate the remaining power of the battery at this time.

It is to be noted that the first direction is perpendicular to the second direction.

In other embodiments, different colors may be used to indicate the amount of remaining power, which is the related art and is not described in detail here.

Optionally, the display module further includes a control unit, the control unit is used for controlling the LED lamps to be turned on/off, and the control unit includes a switch button 50, a rubber pad 51, and a second button 52. An end of the switch button 50 is connected to the electronic component; the rubber pad 51 is mounted on the waterproof partition 30, and a sealing member is disposed at a junction between the rubber pad 51 and the waterproof partition 30; the second button 52 is slidably connected to the housing 10 and placed in the first mounting space; and the switch button 50, the rubber pad 51, and the second button 52 are arranged in sequence along the first direction.

With such a design, the second button 52 is placed in the first mounting space so that the waterproof partition 30 between the second button 52 and the electronic component performs waterproof protection to prevent the waterdrop or water vapor. When a user presses the second button 52 to activate and light up the display module, the joint between the second button 52 and the housing 10 enters the housing 10 and is in contact with the electronic component. At the same time, the rubber pad 51 is added on the waterproof partition 30 so that the second button 52 is pressed to act on the switch button 50 mounted on the electronic component, and the normal use of the control module is not affected while the waterproof setting is performed.

Optionally, the electronic component includes a circuit board 60, the waterproof battery pack further includes a connection terminal, the connection terminal includes a metal connector 70 and a bracket 71, the bracket 71 is fixedly connected to the circuit board 60, the metal connector 70 is mounted on the bracket 71, the metal connector 70 includes multiple first connection points 701 and a second connection point 702, the first connection points 701 penetrate the bracket 71 and are connected to the circuit board 60, and the second connection point 702 is used for connecting the power tool.

In this manner, in order that the metal connector 70 can be in contact with the circuit board 60 stably, in this embodiment, the bracket 71 is fixedly connected to the circuit board 60, and after the metal connector 70 and the bracket 71 are mounted, the first connection points 701 can be in contact with the circuit board 60 stably.

Generally, the power tool can be connected to the second connection point 702 of the metal connector 70 through a bypass hole opened on the housing 10. The setting of the bypass hole results in the following: the waterdrop or water vapor easily enters the housing 10 from the bypass hole, penetrates the bottom of the bracket 71 along the metal connector 70 through a connection gap between the metal connector 70 and the bracket 71, and is in contact with the electronic element. For this reason, optionally, in this embodiment, a junction between the metal connector 70 and the bracket 71 is sealed with glue.

Due to the fluidity and plasticity of the glue, the glue is used for sealing, and the glue can enter the small gap at the junction for sealing.

To ensure a stable connection between the metal connector 70 and the circuit board 60, the bracket 71 on which the metal connector 70 is mounted is fixedly connected to the circuit board 60, and the following is caused: it is difficult to perform glue injection and sealing at the connection gap between the bracket 71 and the metal connector 70 after the bracket 71 and the circuit board 60 are mounted. Therefore, optionally, in this embodiment, an S-shaped glue injection groove 711 is opened on a side of the bracket 71 facing the circuit board 60, the glue injection groove is connected to each of the multiple first connection points 701, a glue injection hole 61 is opened on the circuit board 60 at an end of the glue injection groove, and an observation hole 62 is opened at the other end of the glue injection groove. With such a design, during glue injection, the glue injection hole 61 and the observation hole 62 are placed upward, the glue is injected from the glue injection hole 61, and the glue spreads along the S-shaped glue injection groove 711 until the glue overflows from the observation hole 62, which may be considered that the glue fills the entire S-shaped glue injection groove 711 and the gap between the metal connector 70 and the bracket 71.

Optionally, a support portion is disposed at the bottom of the bracket 71, the housing 10 abuts against the periphery of the support portion, and a sealing member is disposed at an abutting position between the support portion and the housing 10. In this manner, the waterdrop or water vapor entering from the bypass hole is limited in the space formed by the housing 10 and the support portion, and a sealing member is disposed at the connected abutting position so that the sealing property of the space is further strengthened, and the external waterdrop or water vapor cannot be in contact with the electronic component to cause a short circuit.

Specifically, a groove is opened at the abutting position between the support portion and the housing 10, and a sealing member fills the groove.

In other embodiments, the glue injection hole 61 and the observation hole 62 are opened at the bottom of the groove, the groove is placed upward after the bracket 71 and the circuit board 60 are mounted, the glue is injected from the glue injection hole 61 into the space between the circuit board 60 and the bottom of the bracket 71, the glue overflows from the observation hole 62 after the entire space is filled, and the glue injection continues until the entire groove is filled with the glue. With such a design, the filling of the gap between the electronic connector and the bracket 71 and the filling of the sealing member in the groove are further completed.

Optionally, an elastic member is disposed in the first mounting space so that the first button 21 has a tendency to move toward a side facing away from the electronic component. In this manner, when the connector 22 is connected to the power tool, a stable connection relationship can be maintained.

In an embodiment, the elastic member is a spring.

Optionally, the housing 10 includes an upper housing and a lower housing, and a sealing member is disposed at a junction between the upper housing and the lower housing. In this manner, the following can be avoided: the waterdrop or water vapor enters the housing 10 from the junction between the upper housing and the lower housing to be in contact with the electronic component, and a short circuit is caused.

It is to be noted that the sealing member in this embodiment may be a rubber pad, glue, or another sealing member that can achieve a seamless connection.

## Claims

1. A waterproof battery pack, comprising a housing (10), an electronic component, and a connection assembly (20), wherein an interior of the housing (10) is hollow to form a mounting cavity; the electronic component is mounted in the mounting cavity; and the connection assembly (20) is slidably connected to the housing (10), the connection assembly (20) comprises a first button (21) and a connector (22), and the first button (21) is configured to be pressed toward a side of the electronic component to drive the connector (22) to be disconnected from a power tool; wherein the waterproof battery pack further comprises:
a waterproof partition (30) located between the connection assembly (20) and the electronic component, wherein the waterproof partition (30) is connected to the housing (10) to divide the mounting cavity into a first mounting space and a second mounting space that are independent of each other;
wherein the connection assembly (20) is mounted in the first mounting space, and the electronic component is mounted in the second mounting space.

2. The waterproof battery pack of claim 1, wherein a sealing member is disposed at a junction between the waterproof partition (30) and the housing (10).

3. The waterproof battery pack of claim 1 or 2, comprising a display module, wherein the display module comprises a display unit, wherein the display unit comprises:
an LED lamp (40), wherein the LED lamp (40) is mounted on the electronic component;
a transparent lens (41) mounted on the waterproof partition (30), wherein a sealing member is disposed at a junction between the transparent lens (41) and the waterproof partition (30); and
a display screen (42) mounted on the housing (10) and placed above the first mounting space;
wherein the LED lamp (40), the transparent lens (41), and the display screen (42) are arranged in sequence along a first direction.

4. The waterproof battery pack of claim 3, wherein the display module further comprises a control unit, wherein the control unit comprises:
a switch button (50), wherein an end of the switch button (50) is connected to the electronic component;
a rubber pad (51) mounted on the waterproof partition (30), wherein a sealing member is disposed at a junction between the rubber pad (51) and the waterproof partition (30); and
a second button (52) slidably connected to the housing (10) and placed in the first mounting space;
wherein the switch button (50), the rubber pad (51), and the second button (52) are arranged in sequence along the first direction; and
the control unit is used for controlling the LED lamp (40) to be turned on or off.

5. The waterproof battery pack of anyone of the claims 1 to 4, wherein the electronic component comprises a circuit board (60), the waterproof battery pack further comprises a connection terminal, the connection terminal comprises a metal connector (70) and a bracket (71), the bracket (71) is fixedly connected to the circuit board (60), the metal connector (70) is mounted on the bracket (71), the metal connector (70) comprises a plurality of first connection points (701) and a second connection point (702), the plurality of first connection points (701) penetrate the bracket (71) and are connected to the circuit board (60), and the second connection point (702) is used for connecting the power tool.

6. The waterproof battery pack of claim 5, wherein a junction between the metal connector (70) and the bracket (71) is sealed with glue.

7. The waterproof battery pack of claim 6, wherein a glue injection groove (711) which is S-shaped is opened on a side of the bracket (71) facing the circuit board (60), the glue injection groove (711) is connected to each of the plurality of first connection points (701), a glue injection hole (61) is opened on the circuit board (60) at an end of the glue injection groove (711), and an observation hole (62) is opened at another end of the glue injection groove (711).

8. The waterproof battery pack of anyone of the claims 5 to 7, wherein the bracket (71) is provided with a support portion, the housing (10) abuts against a periphery of the support portion, and a sealing member is disposed at an abutting position between the support portion and the housing (10).

9. The waterproof battery pack of anyone of the claims 1 to 8, wherein an elastic member is disposed in the first mounting space so that the first button (21) has a tendency to move toward a side facing away from the electronic component.

10. The waterproof battery pack of any one of claims 1 to 9, wherein the housing (10) comprises an upper housing and a lower housing, and a sealing member is disposed at a junction between the upper housing and the lower housing.
